Europäisches Patentamt

European Patent Office

Office européen des brevets

(19)

(11) **EP 1 053 457 B1**

(12) **FASCICULE DE BREVET EUROPEEN**

(45) Date de publication et mention
de la délivrance du brevet:
**24.11.2004 Bulletin 2004/48**

(51) Int Cl.⁷: **G01L 3/14**, G01L 5/22,
B62D 5/04

(21) Numéro de dépôt: **99901700.7**

(86) Numéro de dépôt international:
**PCT/FR1999/000227**

(22) Date de dépôt: **03.02.1999**

(87) Numéro de publication internationale:
**WO 1999/040403 (12.08.1999 Gazette 1999/32)**

(54) **CAPTEUR DE COUPLE POUR ARBRE TOURNANT**

DREHMOMENTSENSOR FÜR EINE DREHENDE WELLE

TORQUE SENSOR FOR ROTATING SHAFT

(84) Etats contractants désignés:
**DE FR GB IT**

(30) Priorité: **04.02.1998 FR 9801293**

(43) Date de publication de la demande:
**22.11.2000 Bulletin 2000/47**

(73) Titulaire: **S.N.R. ROULEMENTS**
**74010 Annecy Cédex (FR)**

(72) Inventeur: **NICOT, Christophe**
**74330 Epagny (FR)**

(74) Mandataire: **Keib, Gérard**
**Bouju Derambure Bugnion,**
**52, rue de Monceau**
**75008 Paris (FR)**

(56) Documents cités:
**EP-A- 0 442 091**          **WO-A-97/08527**

## Description

L'invention se rapporte au domaine technique des capteurs de couple, c'est-à-dire des dispositifs permettant de détecter l'application d'un couple sur un arbre.

L'invention se rapporte plus particulièrement à la mesure de couple appliqué sur un arbre.

Pour mesurer le couple transmis entre deux organes tournant, on utilise généralement des couplemètres à déformation élastique.

L'élément déformant est fréquemment formé par une barre de torsion.

Pour éviter la torsion gauche et une concentration de contraintes préjudiciable à la résistance en fatigue notamment, les barres de torsion des couplemètres sont conventionnellement de section circulaire.

Pour un matériau donné, en élasticité linéaire isotrope, l'angle de torsion $\tilde{O}$ vaut en torsion pure :

$$\tilde{O} = \frac{32ML}{\pi d^4 G}$$

où d est le diamètre externe de la barre creuse ou non ;

M est le couple appliqué à la barre de torsion ;
G est le module d'élasticité transversale ;
L est la longueur utile de la barre.

De sorte que pour un matériau et une géométrie de barre donnée, il est possible de relier l'angle de torsion au couple appliqué à la barre.

Des couplemètres à barre de torsion peuvent être trouvés dans les documents suivants : FR-2 705 455, GB-2 306 641, WO-87/02319, WO-92/20560, WO-95/19557, WO-96106330, WO-97/08527, WO-97/09221, EP-325 517, EP-369 311, EP-286 053, EP-437 437, EP-418 763, EP-453 344, EP-515 052, EP-555 987, EP-562 426, EP-566 168, EP-566 619, EP-638 791, EP-673 828, EP-681 955, EP-728 653, EP-738 647, EP-738 648, EP-765 .795, EP-770 539, EP-802 107.

Les principales méthodes de mesure de couple d'un arbre tournant, comportant ou non une barre de torsion, sont les suivantes :

- méthode basée sur un phénomène électromagnétique
- méthodes optiques
- méthodes électriques.

Les méthodes magnétiques mettent essentiellement en oeuvre la magnétostriction et l'effet Hall.

Par magnétostriction, on désigne la déformation mécanique réversible qui accompagne la variation d'aimantation d'un solide ferromagnétique.

Ce phénomène est réversible : une déformation exercée sur un matériau ferromagnétique placé dans un champ magnétique provoque une variation de l'aimantation (magnétostriction inverse).

Des exemples de détecteurs magnétostrictifs ou magnétoélastiques permettant la mesure de couple par la mesure des variations de perméabilité de zone magnétiquement anisotrope peuvent être trouvées dans les documents suivants : EP-229 688, EP-261 980, EP-270 122, EP-288 049, EP-309 979, EP-321 662, EP-330 311, EP-338 227, EP-384 042, EP-420 136, EP-422 702, EP-444 575, EP-502 722, EP-523 025, EP-562 012, EP-651 239.

Par effet Hall, l'on désigne conventionnellement la production d'un champ électrique normal au vecteur densité de courant dans un conducteur ou semi-conducteur placé dans un champ d'induction magnétique normal au vecteur densité de courant.

Des capteurs de couple mettant en oeuvre l'effet Hall peuvent être trouvés notamment dans les documents suivants : FR-2.689.633, FR-2.737.010.

Les méthodes optiques de mesure de couple sont essentiellement associées à des phénomènes d'interférence ou de mesure de densité optique. On peut se référer, par exemple, aux documents suivants : EP-194 930, EP-555 987, US-5 490 450, US-4 676 925, US-4 433 585, US-5 001 937, US-4 525 068, US-4 939 368, US-4 432 239, FR-2 735 232, FR-2 735 233, WO-95/19557.

Les méthodes électriques de mesure de couple sont essentiellement liées à la mesure capacitive ou à une mesure de différence de phase entre deux codeurs magnétiques montés circonférentiels à l'axe de torsion.

Les documents EP-263 219, EP-352 595, EP-573 808 sont relatifs à des dispositifs de mesure de couple par jauge d'extensométrie ou jauge de contrainte.

Le document WO 97/08527 décrit un dispositif de mesure de couple sur un arbre tournant. Des organes générateurs sont montés sur un support, symétriquement par rapport à l'arbre et dans un même plan perpendiculaire à l'arbre. Des organes récepteurs sont également montés sur un support, symétriquement par rapport à l'arbre et dans un même plan perpendiculaire à l'arbre, ledit plan étant parallèle et à distance du plan contenant les organes générateurs.

Par ailleurs, on connaît, notamment du document EP 0 442 091, un capteur de couple comprenant :

- une couronne extérieure sur laquelle est appliqué le couple à mesurer sur une colonne, deux enveloppes étant assemblées à la couronne extérieure ;
- un moyeu solidaire en rotation de la colonne, la couronne étant assemblée au moyeu par des rayons déformables ;
- une enveloppe non contrainte assemblée au moyeu par des supports non contraints ;

dans lequel des bobines fixées sur un boîtier agencé autour des enveloppes mesurent les petits déplacements relatifs des enveloppes assemblées à la couronne par rapport à l'enveloppe non contrainte lorsqu'un couple est appliqué.

L'invention est relative à un capteur de couple pour arbre tournant, ce capteur étant de faible coût, de grande raideur, insensible aux perturbations électromagnétiques, de construction simple, ne nécessitant pas la dissociation en trois parties de l'arbre sur lequel doit être mesuré le couple.

Ce capteur de couple ou couplemètre possède au moins un générateur de champ magnétique et au moins un organe détecteur de champ magnétique, à effet Hall.

Le dispositif de mesure comprend au moins un générateur de champ magnétique disposé dans un premier plan d'une section droite dudit arbre et au moins un organe détecteur du champ magnétique, en position fixe dans un second plan d'une section droite dudit arbre, l'organe détecteur délivrant un signal proportionnel au couple de torsion par suite du décalage angulaire relatif du générateur de champ par rapport à l'organe détecteur, le générateur de champ magnétique possédant une structure aimantée à directions d'aimantation antiparallèles et étant supporté par des moyens support solidaires des moyens de commande de l'arbre tournant, le détecteur de champ magnétique étant disposé sensiblement en regard du générateur de champ magnétique et étant supporté par des moyens support solidaires de l'arbre tournant.

Les moyens support du générateur de champ magnétique et les moyens support du détecteur de champ magnétique sont formés par

- un premier anneau extérieur déplaçable
- un second anneau extérieur, sensiblement non contraint placé à distance de l'anneau extérieur déplaçable,

l'anneau extérieur déplaçable étant apte à être solidaire rigidement du moyen appliquant le couple à mesurer sur l'arbre mené,

l'anneau extérieur déplaçable étant assemblé à un anneau intérieur par au moins un moyen déformable élastiquement, l'anneau intérieur étant solidaire en rotation de l'arbre mené,

l'anneau extérieur sensiblement non contraint étant assemblé à l'anneau intérieur par au moins un moyen sensiblement non contraint,

de sorte que le décalage angulaire relatif du générateur de champ par rapport à l'organe détecteur de champ est provoqué par le petit déplacement relatif des deux anneaux extérieurs, l'un par rapport à l'autre, sous l'effet du couple appliqué par les moyens appliquant le couple.

Dans un mode de réalisation, le générateur de champ magnétique est supporté par l'anneau extérieur déplaçable, le capteur de champ étant supporté par l'anneau extérieur sensiblement non contraint.

Dans un autre mode de réalisation, le générateur de champ magnétique est supporté par l'anneau extérieur sensiblement non contraint, le capteur de champ étant supporté par l'anneau extérieur déplaçable.

Le dispositif comporte, dans une réalisation, deux capteurs de champ et deux générateurs de champ disposés en regard sur un diamètre des anneaux extérieurs.

Les anneaux extérieurs sont coaxiaux et sensiblement de même diamètre.

Le moyen déformable élastiquement associant le premier anneau extérieur déformable et l'anneau intérieur est une poutre s'étendant radialement de l'anneau intérieur vers l'anneau extérieur déplaçable.

Le moyen sensiblement non contraint associant le second anneau extérieur sensiblement non contraint et l'anneau intérieur est une poutre s'étendant radialement de l'anneau intérieur vers le second anneau extérieur sensiblement non contraint.

Dans un autre mode de réalisation, le moyen déformable élastiquement associant l'anneau extérieur déplaçable à l'anneau intérieur est un tube déformable en torsion.

L'invention se rapporte également à l'application d'un capteur de couple tel que présenté ci-dessus aux colonnes de direction assistée de véhicule automobile.

D'autres objets et avantages de l'invention apparaîtront plus complètement au cours de la description suivante de modes de réalisation, description qui va être faite en se référant aux dessins annexés dans lesquels :

- la figure 1 est une vue en perspective d'un moyeu à corps d'épreuve en flexion selon un mode de réalisation ;

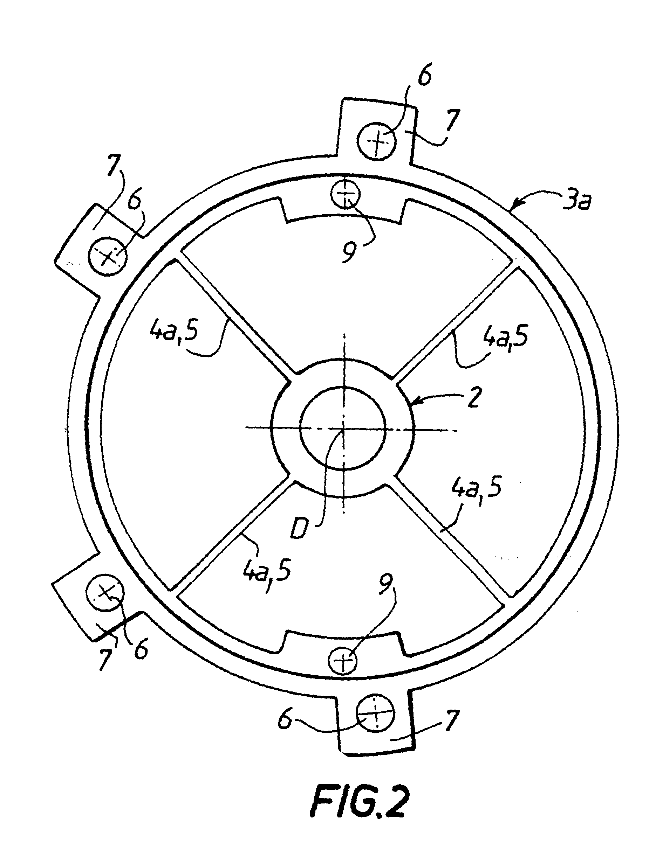

- la figure 2 est une vue de face correspondant à la figure 1 ;
- la figure 3 est une vue de face d'un moyeu à corps d'épreuve en flexion selon un autre mode de réalisation ;
- la figure 4 est une vue de face d'un moyeu à corps d'épreuve en flexion pourvu de poutres butées selon un mode de réalisation ;

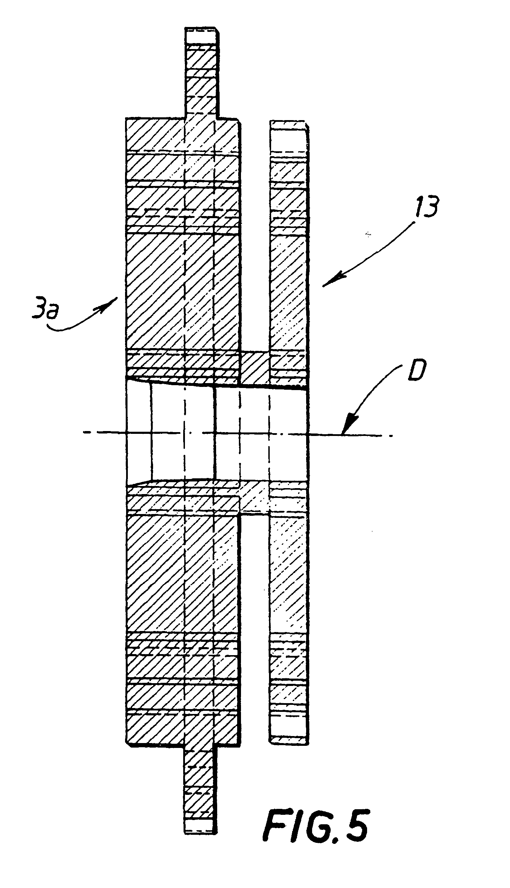

- la figure 5 est une vue en coupe selon la ligne V-V de la figure 4 ;
- la figure 6 est une vue de face d'un moyeu à corps d'épreuve en flexion, selon un autre mode de réalisation ;
- la figure 7 est une vue en coupe selon la ligne VII-VII de la figure 6 ;
- la figure 8 est une vue en coupe selon la ligne VIII-VIII de la figure 6 ;
- la figure 9 est une vue en perspective d'un moyeu à corps d'épreuve à torsion selon un mode de réalisation ;
- la figure 10 est une vue de face correspondant à la figure 9 ;

- la figure 11 est une vue en coupe selon la ligne XI-XI de la figure 10 ;
- les figures 12, 13 et 14 sont des vues de face de moyeux à corps d'épreuve en flexion selon d'autres modes de réalisation ;
- la figure 15 est une vue schématique en perspective d'un capteur à effet Hall destiné à être intégré dans un moyeu tel que représenté en figures 1 à 14, selon un mode de réalisation.

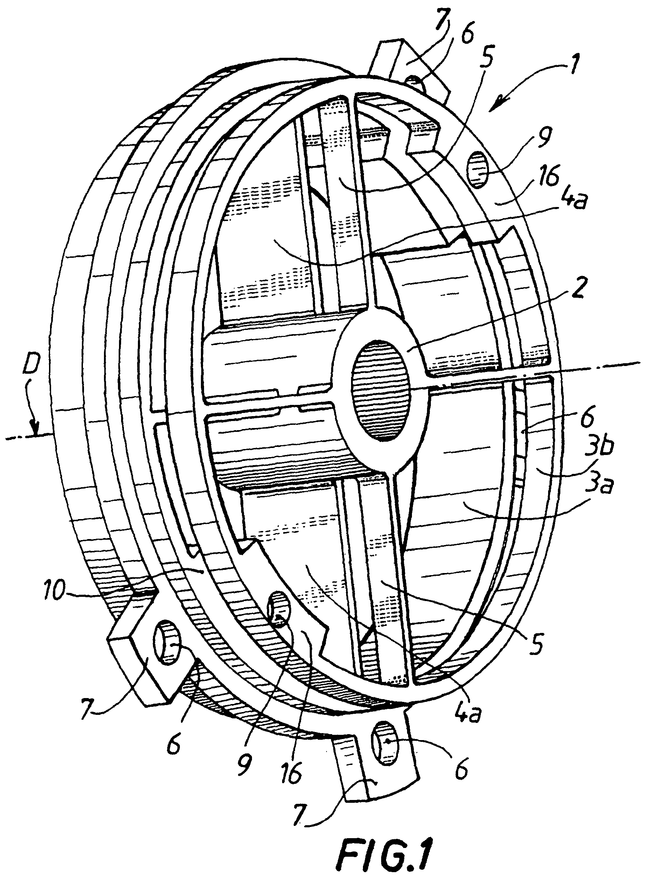

L'on se rapporte tout d'abord à la figure 1.

Le moyeu à corps d'épreuve en flexion représenté en perspective en figure 1 est destiné à être intégré entre un moyen de commande d'un arbre mené et cet arbre mené ou entre un arbre menant et un arbre mené.

Ce moyeu 1 comporte un anneau intérieur 2 cylindrique et deux anneaux extérieurs 3a, 3b reliés à l'anneau intérieur 2 par des poutres élastiques déformables en flexion 4a et des poutres non déformées 5.

Plus précisément, l'anneau extérieur 3a fixé au moyen de commande de l'arbre mené par des vis ou équivalent passant dans des trous 6, est relié à l'anneau intérieur par l'intermédiaire de poutres élastiques déformables en flexion 4a.

Les anneaux extérieurs 3a, 3b sont, dans le mode de réalisation, sensiblement coaxiaux et de même diamètre moyen.

Dans le mode de réalisation représenté, les poutres déformables 4a sont au nombre de quatre, régulièrement réparties perpendiculairement à l'axe de l'arbre mené D.

Dans d'autres modes de réalisation, non représentés, ces poutres déformables sont au nombre de deux, trois ou plus de quatre.

L'anneau extérieur 3b est relié à l'anneau intérieur 2 par le biais de poutres radiales non déformées 5.

Dans le mode de réalisation représenté, ces poutres non déformées 5 sont au même nombre que les poutres déformables élastiquement en flexion 4a, les poutres 4a, 5 étant situées sensiblement selon deux plans radiaux perpendiculaires à l'axe de l'arbre mené D.

Dans d'autres modes de réalisation, non représentés, les poutres 5 sont au nombre de deux, trois ou plus de quatre, le nombre de poutres 4a étant de quatre.

Dans certains modes de réalisation, non représentés, le nombre de poutres 4a est différent de quatre est différent du nombre de poutres 5.

Dans d'autres modes de réalisations, non représentés, le nombre de poutres 4a est égal au nombre de poutres 5, ce nombre étant différent de quatre.

Dans d'autres modes encore de réalisation, non représentés, l'anneau extérieur 3b est relié à l'anneau intérieur 2 par le biais d'un voile annulaire.

Les poutres 4a, 5 peuvent être, ainsi qu'il est représenté, sensiblement disposées à l'aplomb les unes des autres, selon des plans radiaux communs.

Dans d'autres modes de réalisation, non représentés, les poutres 5 sont disposées selon des plans radiaux décalés par rapport aux plans radiaux des poutres 4a.

L'anneau extérieur déplaçable 3a du moyeu 1 est associé rigidement au moyen de commande de l'arbre mené, des vis ou tout autre moyen équivalent passant par exemple dans des trous 6 de pattes d'attaches 7.

En variante, le moyeu à corps d'épreuve peut être d'une pièce avec l'organe de commande de l'arbre mené, par exemple venu de matière avec celui-ci ou soudé à celui-ci par tout moyen adapté.

Lorsque le moyen de commande de l'arbre mené exerce un effort sur l'anneau extérieur 3a, une déformation en flexion des poutres 4a est obtenue, déformation d'autant plus forte que le couple résistant sur l'arbre mené est important.

L'anneau extérieur 3b, quant à lui, reste sensiblement non contraint. Sa position peut ainsi servir de base de référence pour la mesure du déplacement de l'anneau extérieur 3a.

L'anneau extérieur 3b porte des capteurs 8 aptes à mesurer des petits déplacements, de l'ordre de quelques microns à quelques centaines de microns.

Dans le mode de réalisation représenté, ces capteurs 8 sont au nombre de deux et sont disposés dans des logements 9 axiaux, ménagés dans l'anneau avant 3b, au droit de l'anneau arrière 3a.

Les capteurs 8 sont à effet Hall ou magnétorésistifs.

Bien qu'une seule sonde à effet Hall suffise à la mesure de petits déplacements, on peut, pour des raisons de fiabilité, disposer dans l'entrefer de mesure 10 plusieurs sondes afin de créer une redondance.

Chacune des sondes peut posséder son propre circuit électronique associé.

Par comparaison ou combinaison des signaux délivrés par deux, trois ou quatre sondes différentes, on peut détecter une défaillance éventuelle de l'une des sondes et assurer une bonne fiabilité au couplemètre.

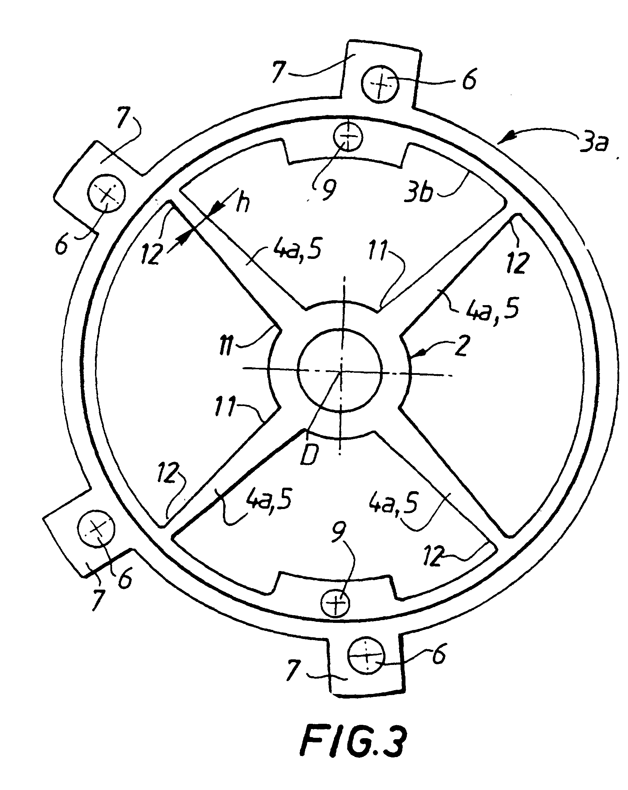

Un deuxième mode de réalisation du moyeu 1 va maintenant être décrit en référence à la figure 3.

Le moyeu 1 représenté en figure 3 comporte, tout comme le moyeu qui vient d'être décrit, un anneau extérieur déplaçable 3a, un anneau extérieur non contraint 3b, un anneau intérieur 2, des poutres déformables 4a reliant l'anneau 3a à l'anneau intérieur 2 et des poutres non déformées 5 reliant l'anneau 3b à l'anneau intérieur 2.

Dans le mode de réalisation représenté en figure 3, le moyeu comporte quatre poutres 4a dont la section varie du pied 11 vers la tête 12 de ces poutres.

Dans d'autres modes de réalisation, le corps d'épreuve comporte une, deux, trois ou plus de quatre poutres de section variable de leur pied vers leur tête.

Cette variation peut être régulière ou non.

Cette variation peut être liée à une variation de la largeur de la poutre et/ou à une variation de l'épaisseur de la poutre.

L'épaisseur h de la poutre est mesurée tangentiellement à un cercle centré sur l'axe principal D de l'arbre mené.

Dans le mode de réalisation représenté en figure 3, cette épaisseur h varie de manière sensiblement linéaire.

Dans d'autres modes de réalisation, non représentés, cette épaisseur h varie de manière polynomiale, logarithmique, de façon continue ou non lorsque l'on s'éloigne de l'axe D de l'arbre mené.

La largeur b des poutres 4a, mesurée suivant la direction D, est sensiblement constante dans le mode de réalisation considéré en figure 3.

Dans d'autres modes de réalisation, non représentés, la largeur b varie de manière linéaire ou polynomiale, la hauteur h étant également variable.

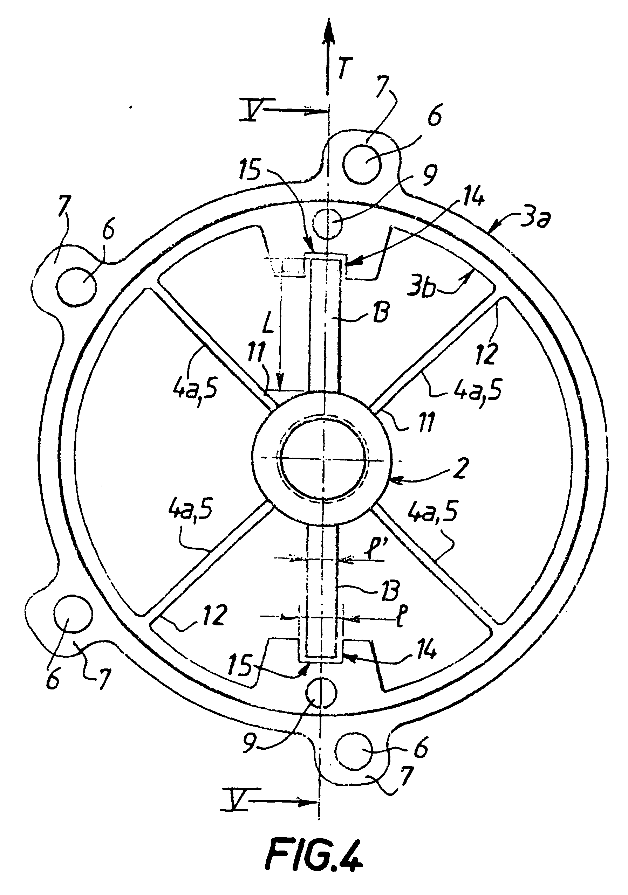

L'on se rapporte maintenant à la figure 4 qui est une vue de face d'un moyeu à corps d'épreuve en flexion, pourvu de poutres butées 13.

Dans le mode de réalisation représenté, deux poutres butées 13 s'étendent radialement selon une direction transversale T depuis l'anneau intérieur 2 vers l'anneau extérieur déformable 3a.

La longueur L des poutres butées 13 est inférieure à celle des poutres déformables 4a, la partie extrême de chaque poutre butée 13 étant engagée, avec un jeu prédéterminé dans une butée de déformation 14.

Les butées de déformation 14 sont en saillie interne de l'anneau extérieur 3a et comportent une gorge 15 de largeur I supérieure à la largeur I' des poutres butées 13.

Le jeu existant entre les butées et les poutre 13, lié à la différence de largeur I-I', peut être déterminé en fonction de la déformation maximum admissible pour les poutres 4a.

Et ceci, par exemple, afin d'éviter leur déformation plastique.

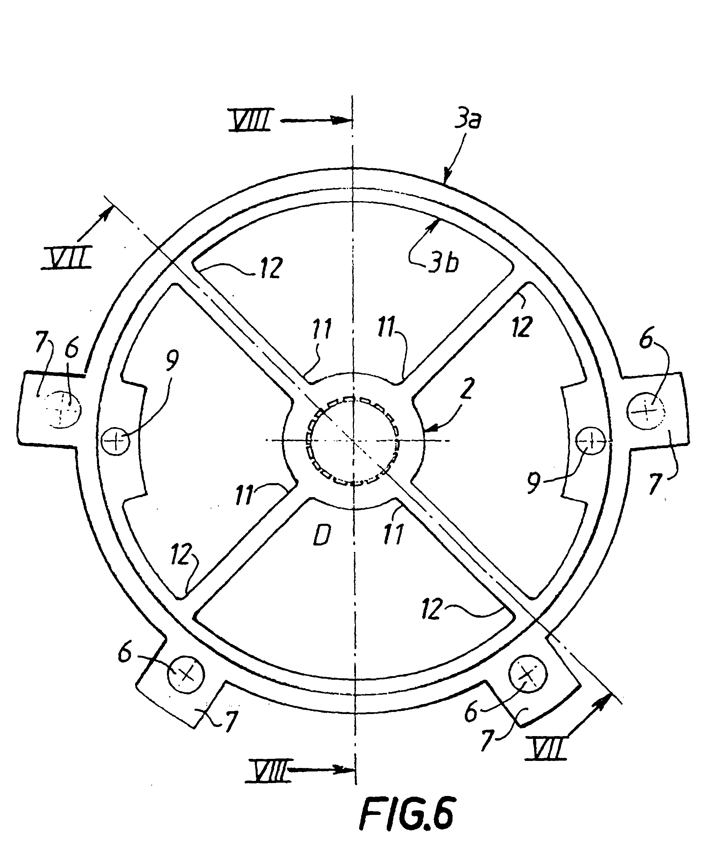

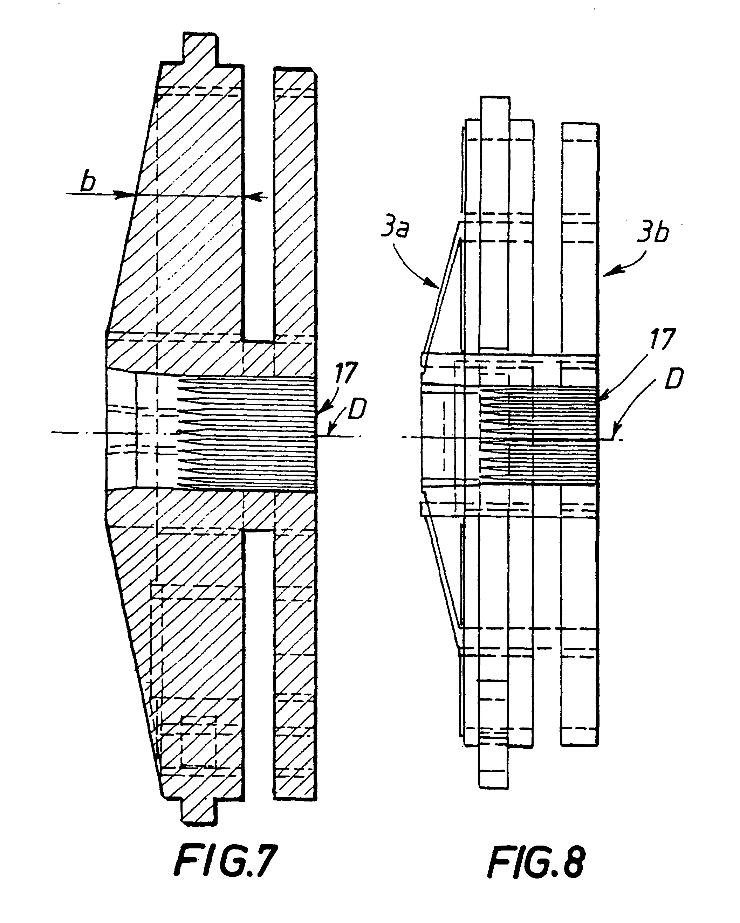

Les figures 6 à 8 illustrent un autre mode de réalisation du moyeu 1 à corps d'épreuve en flexion.

Dans ce mode de réalisation, la largeur b des poutres déformables 4a varie des pieds 11 à la tête 12 de ces poutres, de manière décroissante.

Cette décroissance peut être linéaire ou polynomiale.

Le nombre de poutres déformables 4a, leur répartition angulaire, l'épaisseur et la hauteur des poutres, le matériau employé pour les réaliser conditionnent ainsi qu'il apparaîtra clairement à l'homme du métier, les caractéristiques suivantes :

- module d'inertie ;
- contrainte maximale dans les poutres, pour un couple maximum donné, par exemple à rupture.

Le corps d'épreuve peut être réalisé en un matériau choisi parmi le groupe comprenant : les aciers, les fontes, les alliages aluminium, les alliages de magnésium.

Le corps d'épreuve peut être moulé ou usiné en fonction des matériaux employés, de la géométrie des poutres, du coût admissible notamment, ainsi que l'homme du métier pourra le déterminer.

Lorsque le corps d'épreuve est réalisé en aluminium ou en alliage de magnésium, celui-ci peut être moulé avec un insert métallique comprenant les cannelures de montage du moyeu 1 sur l'arbre mené.

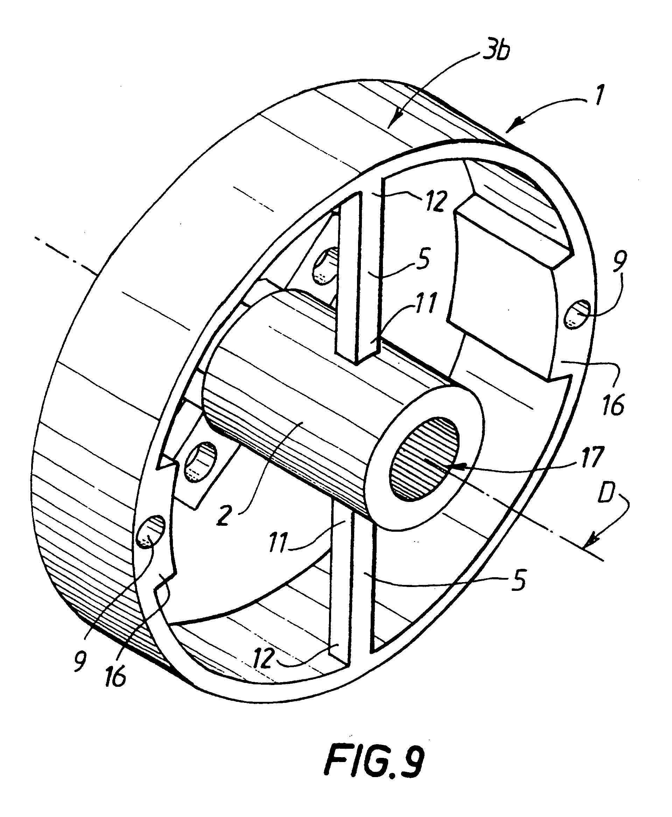

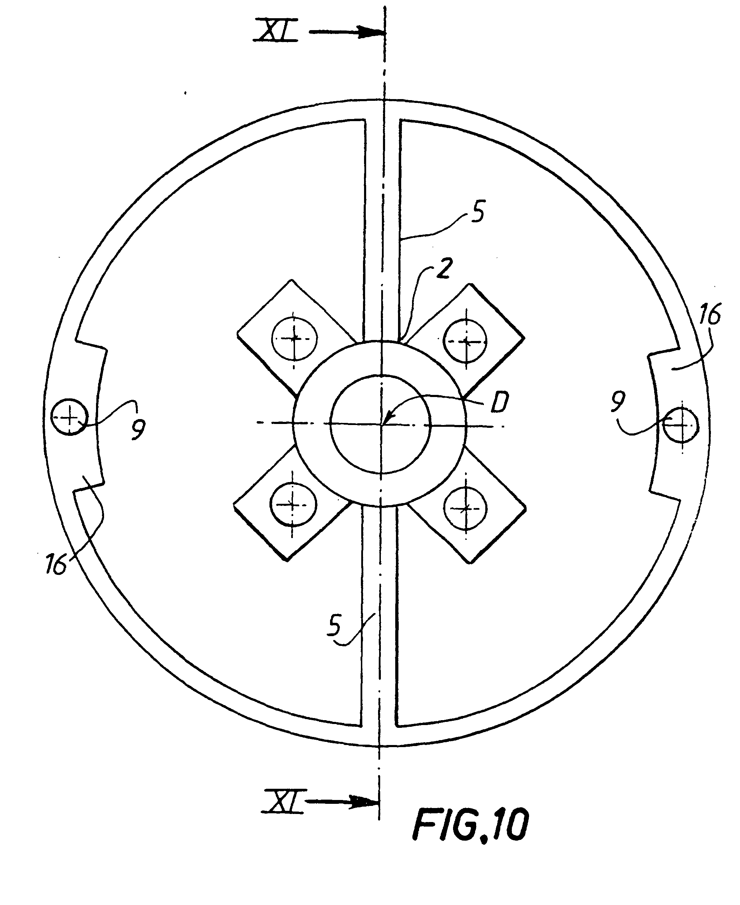

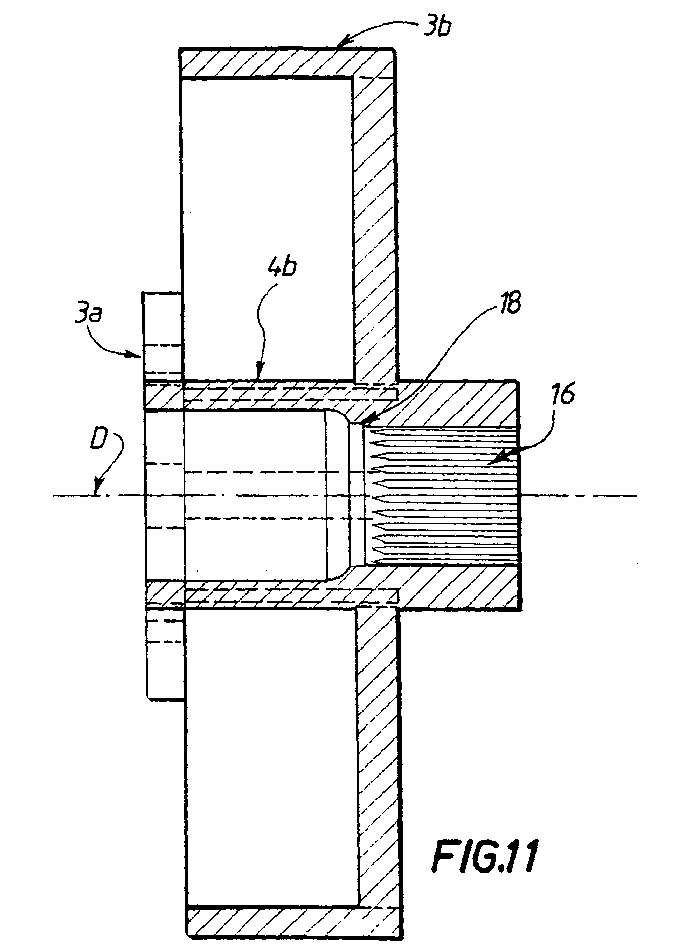

L'on se réfère maintenant aux figures 9 à 11 qui illustrent un mode de réalisation d'un moyeu à corps d'épreuve en torsion.

Le moyeu 1 comporte un anneau extérieur non contraint 3b, de surface périphérique externe sensiblement cylindrique.

Cet anneau 3b est pourvu de deux logements 9, ménagés dans deux surépaisseurs 16 diamétralement opposées.

Entre ces surépaisseurs 16, la surface interne de l'anneau 3b est sensiblement cylindrique.

L'anneau 3b est assemblé à l'anneau intérieur 2 par au moins une poutre 5, un voile ou tout autre élément de liaison sensiblement rigide.

Dans le mode de réalisation représenté, deux poutres radiales 5, venues de matière avec l'anneau interne 2 et l'anneau extérieur non contraint 3b associent ces deux anneaux 2, 3b.

Les poutres 5 sont, dans le mode de réalisation représenté, de section carrée sensiblement constante de leurs pieds 11 à leur tête 12 et sont sensiblement alignées.

L'anneau interne 2 comporte un trou traversant définissant un embout cannelé 17 de fixation à l'arbre mené et, à l'opposé, une surface d'appui 18 de l'arbre cannelé mené.

Un tube déformable en torsion 4b relie l'anneau interne à l'anneau extérieur déplaçable 3a.

Dans un mode de réalisation, le tube déformable en torsion est ajouré longitudinalement, des lumières s'étendant selon la direction D séparant des poutres déformables en flexion torsion.

L'anneau déplaçable 3a est assemblé rigidement au moyen d'application du couple sur l'arbre mené.

Des vis ou équivalents assurent, via les trous 6, la fixation du moyeu 1 sur le moyen d'application du couple sur l'arbre mené.

Lorsque le moyeu 1 est associé rigidement au moyen d'application du couple sur l'arbre mené, l'anneau extérieur déplaçable 3a solidaire du moyen d'application du couple est déplacé en rotation par rapport à l'anneau extérieur non contraint 3b.

La mesure de ce petit déplacement par le biais de sondes de Hall ou magnétorésistives 8 placées dans les logements 9 et d'aimants fixés sur une plaque support 19 solidaire de l'arbre mené permet de la mesure du couple appliqué sur l'arbre mené.

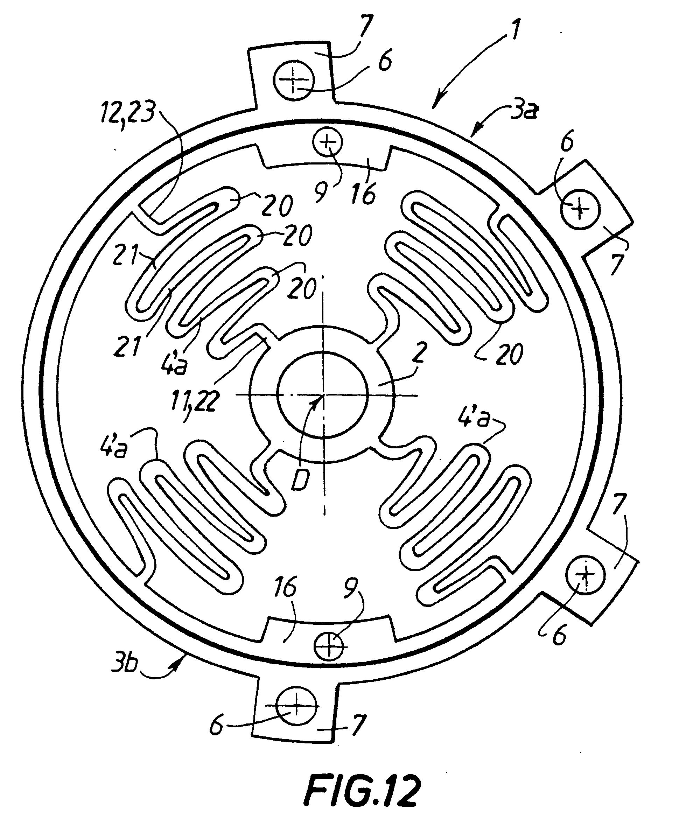

L'on se rapporte maintenant à la figure 12 qui représente un autre mode de réalisation d'un moyeu à corps d'épreuve en flexion.

Dans ce mode de réalisation, les moyens déformables élastiquement reliant l'anneau interne 2 à l'anneau extérieur déplaçable 3a se présentent sous forme de serpentins.

Ces serpentins forment plusieurs coudes 20 séparés par des secteurs sensiblement en arc de cercles 21 concentriques.

Ces serpentins s'étendent sensiblement dans un même plan perpendiculaire à l'axe D de l'arbre mené.

L'épaisseur de chaque serpentin est, dans le mode de réalisation considéré sensiblement constante depuis la base 22 jusqu'à la tête 23 de ces serpentins.

Dans d'autres modes de réalisation, non représentés, les serpentins sont au nombre de deux, trois ou plus de quatre.

L'épaisseur d'au moins un serpentin peut être variable, de sa tête jusqu'à son pied, le cas échéant.

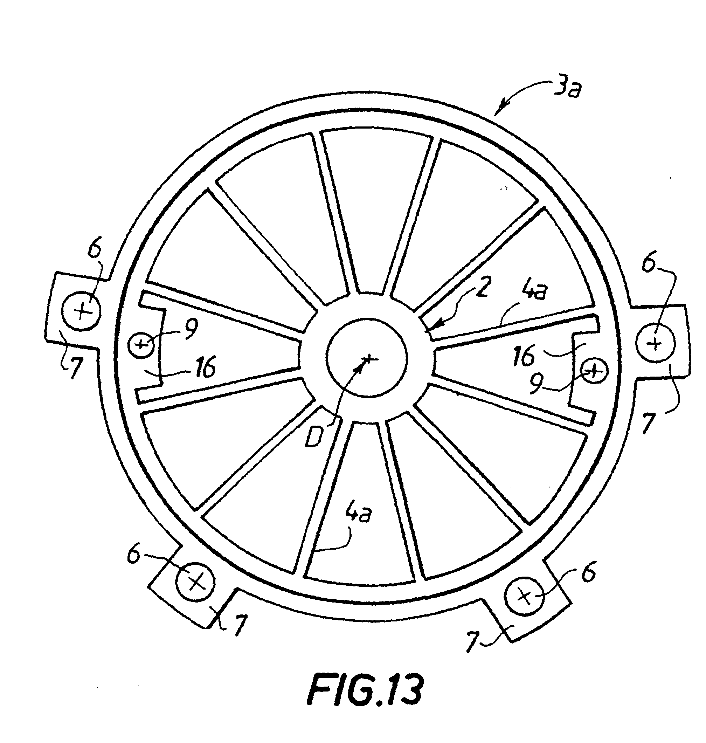

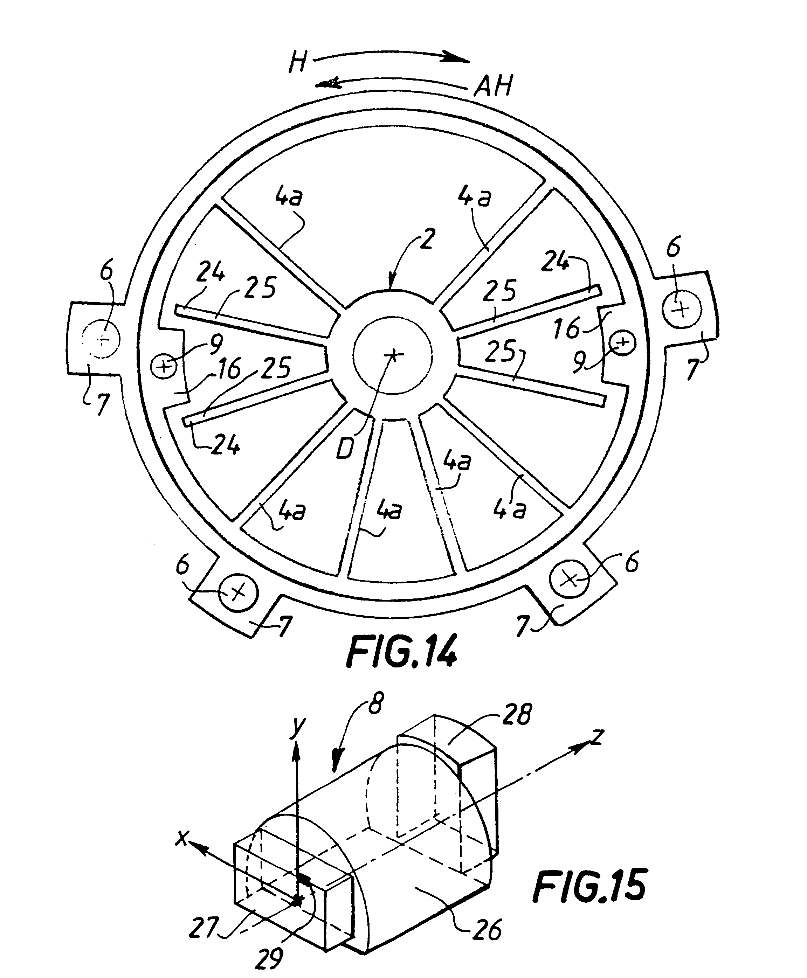

Les figures 13 et 14 sont des vues de face d'un moyeu à corps d'épreuve en flexion, comprenant plus de quatre poutres déformables, en l'occurrence douze poutres réparties radialement régulièrement autour de l'axe D.

Partant du corps d'épreuve représenté en figure 13, il est possible, par usinage ou tout autre moyen équivalent, d'obtenir le corps d'épreuve représenté en figure 14, ne comportant plus que dix poutres déformables dont quatre servent de butées, lors d'une application d'un couple dépassant une valeur seuil.

La butée est obtenue, quel que soit le sens de rotation demandé à l'arbre de transmission, dès qu'une valeur seuil de couple est atteinte, par contact entre la partie extrême 24 des poutres butées 25 et la saillie interne de l'anneau extérieur non déformé 3b.

Selon la disposition angulaire radiale des poutres butées 25, le couple maximum admis dans le sens horaire H pourra être supérieur, égal ou inférieur au couple maximum admis dans le sens antihoraire AH.

Les poutres déformables en flexion décrites ci-dessus comportent, dans certains modes de réalisation, des découpes.

Lors de l'application d'un couple, seules les poutres non découpées en deux tronçons transmettent les efforts, les tronçons des poutres découpées ne transmettant un effort de flexion que lorsqu'un couple appliqué seuil est dépassé.

Les deux tronçons d'une poutre découpée sont, dans un mode de réalisation, distants l'un de l'autre d'une longueur prédéterminée en fonction de ladite valeur seuil pour le couple.

La découpe d'une poutre est, dans un mode de réalisation, disposée sensiblement à 45° par rapport à la direction radiale de la poutre en question.

La réalisation de découpe dans au moins une poutre déplaçable 3a peut permettre, suivant le nombre et la disposition de l'ensemble des poutres notamment,

- soit d'obtenir une protection contre les surcharges, dans les deux sens de rotation possible ;
- soit d'obtenir un couplemètre à plusieurs gammes de mesure de couple, la rigidité du couplemètre augmentant dès lors qu'un grand nombre de poutres sont placées sous charge.

L'on se rapporte maintenant à la figure 15 qui est une vue en perspective d'un capteur 8 selon un mode de réalisation.

Ce capteur 8 comporte un corps cylindrique 26 en matériau ferromagnétique et un détecteur magnétique 27 destiné à faire face au générateur de champ magnétique tel qu'un aimant.

Le capteur 8 comporte, à l'opposé du détecteur magnétique 27, une pièce formant butée 28 limitant le mouvement axial du capteur 8 dans les logements 9.

Le détecteur magnétique 27 comporte un élément sensible 29 excentré par rapport à la section circulaire du capteur 8 de sorte que la rotation du capteur 8 autour de l'axe $O_z$ génère un déplacement suivant l'axe $O_x$ de l'élément sensible 29.

Lors de l'assemblage en usine des capteurs 8, l'opérateur termine le montage par la mesure du signal fourni par les deux capteurs 8 à l'aide d'un appareil adapté.

Ce signal est fonction de la position de l'élément sensible 29 vis-à-vis de la transition magnétique, de sorte que l'opérateur peut, en tournant le capteur 8, amener l'élément sensible 29 en regard de la transition magnétique du générateur de champ magnétique et annuler ledit signal. Une fois ce réglage effectué, les capteurs sont immobilisés, par exemple au moyen d'une colle.

Le réglage décrit ci-dessus est désigné par l'expression réglage par excentration.

La puissance du signal fourni par chaque détecteur magnétique 27 peut être également modulée en modifiant la pénétration axiale des capteurs 8 dans les logements 9 de sorte à modifier l'entrefer entre le détecteur 27 et l'aimant lui faisant face.

Dans le mode de réalisation du capteur 8 représenté en figure 15, la valeur minimale de l'entrefer est fixée par la place formant butée 28, venant se plaquer contre la face avant des surépaisseurs de l'anneau non déformable 3b.

L'étalonnage du couplemètre peut être obtenu, par exemple, par application d'une charge calibrée et réglage du niveau d'amplification du signal.

Un circuit électronique associé au corps d'épreuve comporte, dans un mode de réalisation,

- une arrivée de courant pour l'alimentation en énergie des sondes de Hall ;
- un circuit de filtrage du signal provenant des sondes, afin d'éliminer le bruit de fond ;

- un module assurant la conversion analogique numérique du signal ;
- un module de contrôle et de compensation de dérive du signal émis par les sondes en fonction de la température, par exemple dans une gamme -40° +80°C ;
- un module de sécurité testant régulièrement le bon fonctionnement de chacune des sondes.

Le cas échéant, le circuit électronique comporte un module permettant de fixer le seuil de déclenchement de l'assistance de direction, seuil correspondant à une valeur déterminée, ou encore un module de transmission du signal sans fil ou sans contact.

Le circuit électronique peut être associé, par exemple par collage, à l'anneau non déformé 3b, en face avant.

## Revendications

**1.** Dispositif de mesure d'un couple de torsion sur un arbre tournant, ce dispositif comprenant au moins un générateur de champ magnétique disposé dans un premier plan d'une section droite dudit arbre et au moins un organe détecteur du champ magnétique (8) en position fixe dans un second plan d'une section droite dudit arbre, l'organe détecteur (8) délivrant un signal proportionnel au couple de torsion par suite du décalage angulaire relatif du générateur de champ par rapport à l'organe détecteur (8), le générateur de champ magnétique possède une structure aimantée à directions d'aimantation antiparallèles et est supporté par des moyens support solidaires des moyens de commande de l'arbre tournant, le détecteur de champ magnétique (8) étant disposé sensiblement en regard du générateur de champ magnétique et étant supporté par des moyens support solidaires de l'arbre tournant, **caractérisé en ce que** les moyens support du générateur de champ magnétique et les moyens support du détecteur de champ magnétique (8) sont formés par

- un premier anneau extérieur déplaçable (3a)
- un second anneau extérieur, sensiblement non contraint (3b) placé à distance de l'anneau extérieur déplaçable (3a),

l'anneau extérieur déplaçable (3a) étant apte à être solidaire rigidement du moyen appliquant le couple à mesurer sur l'arbre mené, l'anneau extérieur déplaçable, (3a) étant assemblé à un anneau intérieur (2) par au moins un moyen déformable élastiquement (4a), l'anneau intérieur (2) étant solidaire en rotation de l'arbre mené, l'anneau extérieur sensiblement non contraint (3b) étant assemblé à l'anneau intérieur (2) par au moins un moyen sensiblement non contraint (5), l'anneau déplaçable (3a), l'anneau extérieur sensiblement non contraint (3b) et l'anneau intérieur (2) sont venus de matière avec leurs éléments de liaison (4a, 5) de sorte que le décalage angulaire relatif du générateur de champ par rapport à l'organe détecteur de champ (8) est provoqué par le petit déplacement relatif des deux anneaux extérieurs, l'un par rapport à l'autre, sous l'effet du couple appliqué par les moyens appliquant le couple.

**2.** Dispositif de mesure d'un couple de torsion selon la revendication 1, **caractérisé en ce que** le générateur de champ magnétique est supporté par l'anneau extérieur déplaçable (3a), le capteur de champ étant supporté par l'anneau extérieur sensiblement non contraint (3b).

**3.** Dispositif de mesure d'un couple de torsion selon la revendication 1, **caractérisé en ce que** le générateur de champ magnétique est supporté par l'anneau extérieur sensiblement non contraint (3b), le capteur de champ étant supporté par l'anneau extérieur déplaçable (3a).

**4.** Dispositif de mesure d'un couple de torsion selon l'une quelconque des revendications 1 à 3, **caractérisé en ce qu'**il comporte deux capteurs de champ et deux générateurs de champ disposés en regard sur un diamètre des anneaux extérieurs (3a, 3b).

**5.** Dispositif de mesure d'un couple de torsion selon l'une quelconque des revendications 1 à 4, **caractérisé en ce que** les anneaux extérieurs (3a, 3b) sont coaxiaux et sensiblement de même diamètre.

**6.** Dispositif de mesure d'un couple de torsion selon l'une quelconque des revendications 1 à 5, **caractérisé en ce que** le moyen déformable élastiquement associant le premier anneau extérieur déplaçable (3a) et l'anneau intérieur (2) est une poutre (4a) s'étendant radialement de l'anneau intérieur (2) vers l'anneau extérieur déplaçable (3a).

**7.** Dispositif de mesure d'un couple de torsion selon la revendication 6, **caractérisé en ce qu'**il comporte plusieurs poutres (4a) déformables élastiquement, s'étendant radialement de l'anneau intérieur (2) vers le premier anneau extérieur déplaçable (3a).

**8.** Dispositif de mesure d'un couple de torsion selon la revendication 7, **caractérisé en ce que** les poutres (4a) sont équidistantes les unes des autres.

**9.** Dispositif de mesure d'un couple de torsion selon la revendication 7, **caractérisé en ce que** les poutres déformables élastiquement (4a) ne sont pas équidistantes les unes des autres.

**10.** Dispositif de mesure d'un couple de torsion selon l'une quelconque des revendications 6 à 9, **caractérisé en ce que** la hauteur d'au moins une poutre déformable élastiquement (4a) varie depuis son pied jusqu'à sa tête.

**11.** Dispositif de mesure d'un couple de torsion selon l'une quelconque des revendications 6 à 10, **caractérisé en ce que** l'épaisseur d'au moins une poutre déformable élastiquement (4a) varie depuis son pied jusqu'à sa tête.

**12.** Dispositif de mesure d'un couple de torsion selon la revendication 10, **caractérisé en ce que** la hauteur de l'ensemble des poutres déformables élastiquement (4a) varie de manière identique de leur pied jusqu'à leur tête, l'épaisseur desdites poutres (4a) étant constante.

**13.** Dispositif de mesure d'un couple de torsion selon la revendication 11, **caractérisé en ce que** l'épaisseur de l'ensemble des poutres déformables élastiquement (4a) varie de manière identique de leur pied jusqu'à leur tête, la hauteur desdites poutres (4a) étant constante.

**14.** Dispositif de mesure d'un couple de torsion selon l'une quelconque des revendications 10 à 13, **caractérisé en ce que** la hauteur des poutres déformables élastiquement (4a) varie de manière linéaire depuis le pied jusqu'à la tête desdites poutres (4a).

**15.** Dispositif de mesure d'un couple de torsion selon l'une quelconque des revendications 10 à 13, **caractérisé en ce que** la hauteur des poutres déformables élastiquement (4a) varie de manière polynomiale depuis le pied jusqu'à la tête desdites poutres (4a).

**16.** Dispositif de mesure d'un couple de torsion selon l'une quelconque des revendications 11 à 13, **caractérisé en ce que** l'épaisseur des poutres déformables élastiquement (4a) varie de manière linéaire depuis le pied jusqu'à la tête desdites poutres (4a).

**17.** Dispositif de mesure d'un couple de torsion selon l'une quelconque des revendications 11 à 13, **caractérisé en ce que** l'épaisseur des poutres déformables élastiquement (4a) varie de manière polynomiale depuis le pied jusqu'à la tête desdites poutres (4a).

**18.** Dispositif de mesure d'un couple de torsion selon l'une quelconque des revendications 6 à 17, **caractérisé en ce que** le moyen sensiblement non contraint associant le second anneau extérieur sensiblement non contraint (3b) et l'anneau intérieur (2) est une poutre (5) s'étendant radialement de l'anneau intérieur (2) vers le second anneau extérieur sensiblement non contraint (3b).

**19.** Dispositif de mesure d'un couple de torsion selon la revendications 18, **caractérisé en ce qu'**il comporte plusieurs poutres (5) sensiblement libres de contrainte s'étendant radialement de l'anneau intérieur (2) vers le second anneau extérieur non contraint (3b) et les reliant.

**20.** Dispositif de mesure d'un couple de torsion selon la revendications 19, **caractérisé en ce que** les poutres (5) sensiblement libres de contrainte sont équidistantes les unes des autres.

**21.** Dispositif de mesure d'un couple de torsion selon la revendications 20, **caractérisé en ce que** les poutres (5) sensiblement libres de contrainte ne sont pas équidistantes les unes des autres.

**22.** Dispositif de mesure d'un couple de torsion selon la revendications 20 ou 21, **caractérisé en ce que** les poutres sensiblement libres de contraintes (15) sont sensiblement disposées dans les mêmes plans radiaux que les poutres déformables (4a).

**23.** Dispositif de mesure d'un couple de torsion selon la revendications 20 ou 21, **caractérisé en ce que** les poutres sensiblement libres de contrainte (5) sont de géométrie sensiblement identique à celles des poutres déformables élastiquement (4a).

**24.** Dispositif de mesure d'un couple de torsion selon la revendications 22 ou 23, **caractérisé en ce que** les poutres déformables élastiquement (4a) et les poutres sensiblement libres de contrainte (5) sont chacune au nombre de quatre.

**25.** Dispositif de mesure d'un couple de torsion selon la revendications 6, **caractérisé en ce que** le moyen déformable élastiquement associant l'anneau extérieur déformable (3a) l'anneau intérieur (2) est un tube déplaçable en torsion (4b).

**26.** Dispositif de mesure d'un couple de torsion selon la revendication 25, **caractérisé en ce que** le tube déformable en torsion est ajouré longitudinalement, des lumières s'étendant selon la direction D de l'arbre mené séparant des poutres déformables en flexion torsion.

**27.** Dispositif de mesure d'un couple de torsion selon la revendications 25 ou 26, **caractérisé en ce que** le moyen sensiblement non contraint associant le second anneau extérieur (3b) à l'anneau intérieur (2) est une poutre (5) s'étendant radialement de l'anneau intérieur (2) vers l'anneau extérieur déplaçable (3a).

28. Dispositif de mesure d'un couple de torsion selon la revendication 27, **caractérisé en ce que** deux poutres radiales (5) disposées suivant un diamètre de l'anneau extérieur sensiblement non contraint (3b) le relient à l'anneau intérieur (2).

29. Dispositif de mesure d'un couple de torsion selon la revendication 6, **caractérisé en ce que** le moyen déformable élastiquement associant le premier anneau extérieur déplaçable (3a) et l'anneau intérieur (2) est en forme de serpentin comportant au moins un coude.

30. Dispositif de mesure d'un couple de torsion selon la revendication 29, **caractérisé en ce qu'**il comporte plusieurs serpentins déformables élastiquement s'étendant radialement de l'anneau intérieur (2) vers le premier anneau extérieur déplaçable (3a).

31. Application d'un dispositif de mesure d'un couple de torsion tel que présenté dans les revendications 1 à 31 aux dispositifs de direction assistée de véhicule automobile.

**Patentansprüche**

1. Messvorrichtung eines Drillmoments auf einer Drehwelle, wobei diese Vorrichtung wenigstens einen in einer ersten Ebene eines geraden Abschnitts der genannten Welle angeordneten Magnetfeldgenerator und wenigstens ein Feststellorgan des Magnetfeldes (8) in fester Position in einer zweiten Ebene eines geraden Abschnitts der genannten Welle umfasst, wobei das Feststellorgan (8) im Anschluss an die relative winkelförmige Verschiebung des Feldgenerators im Verhältnis zum Feststellorgan (8) ein zum Drillmoment proportionales Signal ausgibt, der Magnetfeldgenerator besitzt eine magnetisierte Struktur mit antiparallelen Magnetisierungsrichtungen und wird von fest mit Steuermitteln der Drehwelle verbundenen Trägermitteln getragen, wobei das Feststellorgan des Magnetfeldes (8) deutlich gegenüber dem Magnetfeldgenerator angeordnet ist und von mit der Drehwelle fest verbundenen Trägermitteln getragen wird, **dadurch gekennzeichnet, dass** die Trägermittel des Magnetfeldgenerators und die Trägermittel des Feststellorgans des Magnetfeldes (8) durch Folgendes gebildet werden:

- einen ersten äußeren, verschiebbaren Ring (3a)
- einen zweiten äußeren deutlich nicht gespannten, entfernt vom äußeren verschiebbaren Ring (3a) angeordneten Ring (3b),

wobei der äußere verschiebbare Ring (3a) zur steifen festen Verbindung mit dem das auf der geführten Welle zu messende Moment anwendenden Mittel geeignet ist,

wobei der äußere verschiebbare Ring (3a) durch wenigstens ein elastisch verformbares Mittel (4a) mit einem inneren Ring (2) montiert ist, wobei der innere Ring (2) in Rotation mit der geführten Welle fest verbunden ist,

wobei der äußere, deutlich nicht gespannte Ring (3b) durch wenigstens ein deutlich nicht gespanntes Mittel (5) mit dem inneren Ring (2) montiert ist,

wobei der verschiebarre Ring (3a), der äußere, deutlich nicht gespannnte Ring (3b) und der innere Ring (2) sind mit ihren Verbindungselementen (4a, 5) aus demselben Material hergestellt,

so dass die relative winkelförmige Verschiebung des Feldgenerators im Verhältnis zum Feststellorgan des Feldes (8) unter der Wirkung des durch die das Moment anwendenden Mittel angewendeten Moments durch die relative kleine Verschiebung der beiden äußeren Ringe im Verhältnis zueinander hervorgerufen wird.

2. Messvorrichtung eines Drillmoments gemäß Anspruch 1, **dadurch gekennzeichnet, dass** der Magnetfeldgenerator durch den äußeren verschiebbaren Ring (3a) getragen wird, wobei der Feldsensor durch den äußeren, deutlich nicht gespannten Ring (3b) getragen wird.

3. Messvorrichtung eines Drillmoments gemäß Anspruch 1, **dadurch gekennzeichnet, dass** der Magnetfeldgenerator durch den äußeren, deutlich nicht gespannten Ring (3b) getragen wird, wobei der Magnetfeldsensor durch den äußeren, verschiebbaren Ring (3a) getragen wird.

4. Messvorrichtung eines Drillmoments gemäß Anspruch 1 bis 3, **dadurch gekennzeichnet, dass** er zwei auf einem Durchmesser der äußeren Ringe (3a, 3b) gegenüber angeordnete Feldsensoren und zwei Feldgeneratoren umfasst.

5. Messvorrichtung eines Drillmoments gemäß Anspruch 1 bis 4, **dadurch gekennzeichnet, dass** die äußeren Ringe (3a, 3b) koaxial sind und deutlich denselben Durchmesser haben.

6. Messvorrichtung eines Drillmoments gemäß Anspruch 1 bis 5, **dadurch gekennzeichnet, dass** das den ersten äußeren verschiebbaren Ring (3a) und den inneren Ring (2) zuordnende elastisch verformbare Mittel ein sich radial vom inneren Ring (2) zum äußeren verschiebbaren Ring (3a) erstreckender Balken (4a) ist.

7. Messvorrichtung eines Drillmoments gemäß Anspruch 6, **dadurch gekennzeichnet, dass** sie mehrere, sich radial vom inneren Ring (2) zum ersten äußeren verschiebbaren Ring (3a) erstreckende elastisch verformbare Balken (4a) umfasst.

8. Messvorrichtung eines Drillmoments gemäß Anspruch 7, **dadurch gekennzeichnet, dass** die Balken (4a) in derselben Entfernung voneinander beabstandet sind.

9. Messvorrichtung eines Drillmoments gemäß Anspruch 7, **dadurch gekennzeichnet, dass** die elastisch verformbaren Balken (4a) nicht in derselben Entfernung voneinander beabstandet sind.

10. Messvorrichtung eines Drillmoments gemäß Anspruch 6 bis 9, **dadurch gekennzeichnet, dass** die Höhe von wenigstens einem elastisch verformbaren Balken (4a) von seinem Fußende bis zu seinem Kopfende variiert.

11. Messvorrichtung eines Drillmoments gemäß Anspruch 6 bis 10, **dadurch gekennzeichnet, dass** die Dicke wenigstens eines elastisch verformbaren Balkens (4a) von seinem Kopfende bis zu seinem Fußende variiert.

12. Messvorrichtung eines Drillmoments gemäß Anspruch 10, **dadurch gekennzeichnet, dass** die Höhe der Struktur der elastisch verformbaren Balken (4a) auf identische Weise von ihrem Fußende bis zu ihrem Kopfende variiert, wobei die Dicke der genannten Balken (4a) konstant ist.

13. Messvorrichtung eines Drillmoments gemäß Anspruch 11, **dadurch gekennzeichnet, dass** die Dicke der Struktur der elastisch verformbaren Balken (4a) auf identische Weise von ihrem Fußende bis zu ihrem Kopfende variiert, wobei die Höhe der genannten Balken (4a) konstant ist.

14. Messvorrichtung eines Drillmoments gemäß Anspruch 10 bis 13, **dadurch gekennzeichnet, dass** die Höhe der elastisch verformbaren Balken (4a) auf lineare Weise vom Fußende bis zum Kopfende der genannten Balken (4a) variiert.

15. Messvorrichtung eines Drillmoments gemäß Anspruch 10 bis 13, **dadurch gekennzeichnet, dass** die Höhe der elastisch verformbaren Balken (4a) auf polynomische Weise vom Fußende bis zum Kopfende der genannten Balken (4a) variiert.

16. Messvorrichtung eines Drillmoments gemäß Anspruch 11 bis 13, **dadurch gekennzeichnet, dass** die Dicke der elastisch verformbaren Balken (4a) auf lineare Weise vom Fußende bis zum Kopfende der genannten Balken (4a) variiert.

17. Messvorrichtung eines Drillmoments gemäß Anspruch 11 bis 13, **dadurch gekennzeichnet, dass** die Dicke der elastisch verformbaren Balken (4a) auf polynomische Weise vom Fußende bis zum Kopfende der genanten Balken (4a) variiert.

18. Messvorrichtung eines Drillmoments gemäß Anspruch 6 bis 17, **dadurch gekennzeichnet, dass** das den zweiten äußeren, deutlich nicht gespannten Ring (3b) und den inneren Ring (2) zuordnende, deutlich nicht gespannte Mittel ein sich radial vom inneren Ring (2) zum zweiten äußeren, deutlich nicht gespannten Ring (3b) erstreckender Balken (5) ist.

19. Messvorrichtung eines Drillmoments gemäß Anspruch 18, **dadurch gekennzeichnet; dass** sie mehrere deutlich spannungsfreie, sich radial vom inneren Ring (2) zum zweiten äußeren, nicht gespannten Ring (3b) erstreckende und diese miteinander verbindende Balken (5) umfasst.

20. Messvorrichtung eines Drillmoments gemäß Anspruch 19, **dadurch gekennzeichnet, dass** die deutlich spannungsfreien Balken (5) voneinander in derselben Entfernung beabstandet sind.

21. Messvorrichtung eines Drillmoments gemäß Anspruch 20, **dadurch gekennzeichnet, dass** die deutlich spannungsfreien Balken (5) voneinander nicht in derselben Entfernung beabstandet sind.

22. Messvorrichtung eines Drillmoments gemäß Anspruch 20 oder 21, **dadurch gekennzeichnet, dass** die deutlich spannungsfreien Balken (15) deutlich in denselben radialen Ebenen angeordnet sind wie die verformbaren Balken (4a).

23. Messvorrichtung eines Drillmoments gemäß Anspruch 20 oder 21, **dadurch gekennzeichnet, dass** die deutlich spannungsfreien Balken (5) eine deutlich identische Geometrie aufweisen wie die der elastisch verformbaren Balken (4a).

24. Messvorrichtung eines Drillmoments gemäß Anspruch 22 oder 23, **dadurch gekennzeichnet, dass** die elastisch verformbaren Balken (4a) und die deutlich spannungsfreien Balken (5) insgesamt vier Stück sind.

**25.** Messvorrichtung eines Drillmoments gemäß Anspruch 6, **dadurch gekennzeichnet, dass** das den äußeren verformbaren Ring (3a) dem inneren Ring (2) zuordnende elastisch verformbare Mittel ein in Verdrehung verschiebbares Rohr (4b) ist.

**26.** Messvorrichtung eines Drillmoments gemäß Anspruch 25, **dadurch gekennzeichnet, dass** die in Verdrehung verformbare Röhre in Längsrichtung durchbrochen ist, wobei sich Öffnungen gemäß der Richtung D der in Torsionsflexion geführten Welle erstrecken.

**27.** Messvorrichtung eines Drillmoments gemäß Anspruch 25 oder 26, **dadurch gekennzeichnet, dass** das deutlich nicht gespannte, den zweiten äußeren Ring (3b) dem inneren Ring (2) zuordnende Mittel ein sich radial vom inneren Ring (2) zum äußeren, verschiebbaren Ring (3a) erstreckender Balken (5) ist.

**28.** Messvorrichtung eines Drillmoments gemäß Anspruch 27, **dadurch gekennzeichnet, dass** zwei radiale, gemäß einem Durchmesser des äußeren, deutlich nicht gespannten Ring (3b) angeordnete Balken diesen mit dem inneren Ring (2) verbinden.

**29.** Messvorrichtung eines Drillmoments gemäß Anspruch 6, **dadurch gekennzeichnet, dass** das den ersten äußeren verschiebbaren Ring (3a) und den inneren Ring (2) zuordnende elastisch verformbare Mittel die Form einer wenigstens einen Krümmer umfassenden Rohrschlange aufweist.

**30.** Messvorrichtung eines Drillmoments gemäß Anspruch 29, **dadurch gekennzeichnet, dass** sie mehrere, sich radial vom inneren Ring (2) zum ersten äußeren, verschiebbaren Ring (3a) elastisch verformbare Rohrschlangen umfasst.

**31.** Anwendung einer Messvorrichtung eines Drillmoments gemäß Anspruch 1 bis 31 mit Servolenkungsvorrichtungen für Kraftfahrzeuge.

**Claims**

**1.** A device for measuring a torsion torque on a rotating shaft, this device comprising at least one magnetic field generator disposed in a first plane of a cross-section of the said shaft and at least one device (8) for detecting the magnetic field, in a fixed position in a second plane of a cross-section of the said shaft, the detecting device (8) delivering a signal proportional to the torsion torque following a relative angular shift of the field generator with respect to the detecting device (8), the magnetic field generator having a magnetised structure with antiparallel magnetisation directions and being supported by support means fixed to the means of controlling the rotating shaft, the magnetic field detector (8) being disposed substantially opposite the magnetic field generator and being supported by support means fixed to the rotating shaft, **characterised in that** the support means of the magnetic field generator and the support means of the magnetic field detector (8) are formed by

- a first movable external ring (3a);

- a second external ring (3b), substantially unstressed, placed at a distance from the movable external ring (3a);

the movable external ring (3a) being able to be fixed rigidly to the means applying the torque to be measured to the driven shaft, the movable external ring (3a) being connected to an internal ring (2) by at least one elastically deformable means (4a), the internal ring (2) being fixed with respect to rotation to the driven shaft, the substantially unstressed external ring (3b) being connected to the internal ring (2) by at least one substantially unstressed means (5); the movable ring (3a), the substantially unstressed external ring (3b) and the internal ring (2) being made in one piece with their connecting elements (4a, 5); so that the relative angular offset of the field generator with respect to the field detecting device (8) is caused by the small relative movement of the two external rings, with respect to each other, under the effect of the torque applied by the means applying the torque.

**2.** A torsion torque measuring device according to Claim 1, **characterised in that** the magnetic field generator is supported by the movable external ring (3a), the field sensor being supported by the substantially unstressed external ring (3b).

**3.** A torsion torque measuring device according to Claim 1, **characterised in that** the magnetic field generator is supported by the substantially unstressed external ring (3b), the field sensor being supported by the movable external ring (3a).

**4.** A torsion torque measuring device according to any one of Claims 1 to 3, **characterised in that** it has two field sensors and two field generators disposed opposite each other on a diameter of the external rings (3a, 3b).

**5.** A torsion torque measuring device according to any one of Claims 1 to 4, **characterised in that** the external rings (3a, 3b) are coaxial and have substantially the same diameter.

6. A torsion torque measuring device according to any one of Claims 1 to 5, **characterised in that** the elastically deformable means connecting the first movable external ring (3a) and the internal ring (2) is a beam (4a) extending radially from the internal ring (2) to the movable external ring (3a).

7. A torsion torque measuring device according to Claim 6, **characterised in that** it includes several elastically deformable beams (4a), extending radially from the internal ring (2) to the first movable external ring (3a).

8. A torsion torque measuring device according to Claim 7, **characterised in that** the beams (4a) are equidistant from each other.

9. A torsion torque measuring device according to Claim 7, **characterised in that** the elastically deformable beams (4a) are not equidistant from each other.

10. A torsion torque measuring device according to any one of Claims 6 to 9, **characterised in that** the height of at least one elastically deformable beam (4a) varies from its foot to its head.

11. A torsion torque measuring device according to any one of Claims 6 to 10, **characterised in that** the thickness of at least one elastically deformable beam (4a) varies from its foot to its head.

12. A torsion torque measuring device according to Claim 10, **characterised in that** the height of all the elastically deformable beams (4a) varies identically from their foot to their head, the thickness of the said beams (4a) being constant.

13. A torsion torque measuring device according to Claim 11, **characterised in that** the thickness of all the elastically deformable beams (4a) varies identically from their foot to their head, the height of the said beams (4a) being constant.

14. A torsion torque measuring device according to any one of Claims 10 to 13, **characterised in that** the height of the elastically deformable beams (4a) varies in a linear fashion from the foot to the head of the said beams (4a).

15. A torsion torque measuring device according to any one of Claims 10 to 13, **characterised in that** the height of the elastically deformable beams (4a) varies in a polynomial fashion from the foot to the head of the said beams (4a).

16. A torsion torque measuring device according to any one of Claims 11 to 13, **characterised in that** the thickness of the elastically deformable beams (4a) varies in a linear fashion from the foot to the head of the said beams (4a).

17. A torsion torque measuring device according to any one of Claims 11 to 13, **characterised in that** the thickness of the elastically deformable beams (4a) varies in a polynomial fashion from the foot to the head of the said beams (4a).

18. A torsion torque measuring device according to any one of Claims 6 to 17, **characterised in that** the substantially unstressed means connecting the second substantially unstressed external ring (3b) and the internal ring (2) is a beam (5) extending radially from the internal ring (2) to the second substantially unstressed external ring (3b).

19. A torsion torque measuring device according to Claim 18, **characterised in that** it includes several beams (5) substantially free of stress extending radially from the internal ring (2) to the second unstressed external ring (3b) and connecting them.

20. A torsion torque measuring device according to Claim 19, **characterised in that** the beams (5) substantially free of stress are equidistant from each other.

21. A torsion torque measuring device according to Claim 20, **characterised in that** the beams (5) substantially free of stress are not equidistant from each other.

22. A torsion torque measuring device according to Claim 20 or 21, **characterised in that** the beams substantially free of stresses (15) are substantially disposed in the same radial planes as the deformable beams (4a).

23. A torsion torque measuring device according to Claim 20 or 21, **characterised in that** the beams substantially free of stress (5) have a geometry substantially identical to that of the elastically deformable beams (4a).

24. A torsion torque measuring device according to Claim 22 or 23, **characterised in that** the elastically deformable beams (4a) and the beams substantially free of stress (5) are each four in number.

25. A torsion torque measuring device according to Claim 6, **characterised in that** the elastically deformable means connecting the deformable external ring (3a) and the internal ring (2) is a tube (4b) movable under torsion.

**26.** A torsion torque measuring device according to Claim 25, **characterised in that** the tube deformable under torsion is perforated longitudinally, apertures extending in the direction D of the driven shaft separating beams deformable under torsion flexion.

**27.** A torsion torque measuring device according to Claims 25 or 26, **characterised in that** the substantially unstressed means connecting the second external ring (3b) to the internal ring (2) is a beam (5) extending radially from the internal ring (2) to the movable external ring (3a).

**28.** A torsion torque measuring device according to Claim 27, **characterised in that** two radial beams (5) disposed on a diameter of the substantially unstressed external ring (3b) connect it to the internal ring (2).

**29.** A torsion torque measuring device according to Claim 6, **characterised in that** the elastically deformable means connecting the first movable external ring (3a) and the internal ring (2) is in the form of a coil including at least one bend.

**30.** A torsion torque measuring device according to Claim 29, **characterised in that** it includes several elastically deformable coifs extending radially from the internal ring (2) to the first movable external ring (3a).

**31.** Application of a torsion torque measuring device as presented in Claims 1 to 30 to power assisted steering devices for motor vehicles.

**FIG.1**

FIG.2

FIG.3

EP 1 053 457 B1

FIG.4

FIG.5

FIG.6

FIG.7

FIG.8

FIG.9

FIG.10

FIG.11

**FIG.12**

FIG.13

EP 1 053 457 B1

FIG.14

FIG.15